# EUROPEAN PATENT APPLICATION

(11) **EP 4 847 941 A1**
(43) Date of publication of application: **02.12.2026**
(21) Application number: 26178922.6
(22) Date of filing: 15.05.2026
(51) Int. Cl.: G01S 5/02

(54) **PSEUDO-RANDOM DURATIONS OF MMS SLOTS IN UWB MMS RANGING, METHODS AND DEVICES**

(30) Priority: 28.05.2025 FR 2505739
(71) Applicant: STMicroelectronics International N.V., 1228 Plan-les-Ouates, Geneva (CH)
(72) Inventor: MAMAN, Mickael, 38000 Grenoble (FR)
(74) Representative: Casalonga

(57) **Abstract**

An UWB MMS ranging method comprises exchanging interleaved ranging fragments between two devices, the ranging fragments sent by the same device being sent in separate ranging slots. To break the static periodicity of the ranging slots that some attacks exploit, the disclosure provides ranging slots having pseudo-random durations. The two devices operating the UWB MMS ranging share the same key such as the STS key to locally compute the pseudo-random durations. Preferably, the RIF slots are subject to pseudo-random durations, whereas it is optional for the RSF slots. The pseudo-random duration adds a pseudo-random duration selected from 0 to 50 or 100 RSTU, to the legacy half-millisecond (600 RSTU) duration.

## Description

### TECHNICAL DOMAIN

The present disclosure relates generally to wireless network communications and, more specifically, to Ultra-Wide Band (UWB) Multi-millisecond (MMS) ranging.

### BACKGROUND

Ultra-Wide Band (UWB) is a wireless technology recently added to mobile devices that enables not only data-sharing applications, but also provides very accurate ranging, localization and sensing to serve many other use cases such as indoor positioning and navigation.

UWB data transmission uses very short radio frequency pulses (often in the nanosecond range) with low energy, over a large bandwidth of 500 MHz or more. UWB communications operate at frequencies between 3.1GHz and 10.6GHz, for example in a first band between 3.1GHz and 4.8GHz or a second band between 6GHz and 8.5GHz.

IEEE (RTM) P802.15.4ab/D01 (June 2024) introduces so-called UWB Multi-millisecond (MMS) operation which provides for improved UWB ranging sensitivity by accumulating (or aggregating) the channel impulse response (CIR) estimate from a sequence of fragments or "UWB MMS fragments" which are sent in separate milliseconds (they begin on millisecond offsets with respect to the same start time) to comply with regulatory requirements. The sequence of UWB MMS fragments is known as "UWB MMS Ranging Packet". It combines X ranging sequence fragments (RSF) and/or Y ranging integrity fragments (RIF). Usually, X is included in {1, 2, 4, 8, 16} or {1, 2, 4, 8} and Y is included {1, 2, 4, 8}, and these numbers can be negotiated. Three modes are known: (1) X belongs to {1, 2, 4, 8, 16} and Y=0; (2) X belongs to {1, 2, 4, 8} and Y belongs to {1, 2, 4, 8}; and (3) X=0 and Y belongs to {1, 2, 4, 8}.

UWB MMS two-way ranging (TWR) involves interleaving of fragment transmissions and receptions, where an initiator of the ranging and a responder transmit in turn (i.e., alternately) fragments within the UWB MMS Ranging Packet.

Within an MMS ranging phase, all X RSF and Y secured RIF fragments of the UWB MMS Ranging Packet begin on millisecond offsets with respect to the start time of the first RSF or RIF transmitted in the packet. The UWB MMS Ranging Packets sent by the initiator and the responder are time-shifted to ensure interleaving of the fragments.

The ranging phase ends when all X+Y fragments have been sent, after which they process the received fragments and report the result to each other during a report phase.

Slow-Clock Attack and Fast-Clock Attack Attacks have been mentioned in publication IEEE 802.15-22-0499-00-04ab. These attacks use a fragment transmission frequency that is slightly offset (about 40 ppm) compared to the standardized millisecond ranging slots, to mimic a legitimate device by intercepting its ranging fragments and repeating them up to or from the millisecond ranging slot that is perfectly aligned with the reader schedule, given the offset frequency.

A third attack, known as the Ghost Peak Attack, introduces fake early peaks in transmitted RIFs by superimposing the legitimate RIFs with synchronized fake fragments.

Publication IEEE 802.15-22-0499-00-04ab proposes additional STS RIF-RMARKERs as countermeasures against the slow and fast-clock attacks.

Propositions have also been made to combine Single Side (SS)-TWR and Double Side (DS)-TWR, and compare obtained times of flight to detect attacks.

These solutions are not satisfactory, in particular because they require a large number of messages and/or complex computations to detect attacks.

In other words, the existing UWB MMS ranging operation is not fully satisfactory, and a need exists to improve it.

### SUMMARY

The above attacks take advantage of the standardized millisecond period between the start of the ranging fragments. Breaking the periodicity - hence predictable - of the successive fragment transmissions removes the effectiveness of the existing attacks, hence secures the UWB MMS ranging operations.

It is therefore proposed herein to slightly modify the sending time of the ranging fragments, in the vicinity of the millisecond offset to remain compliant with the regulatory requirements while eliminating the risks of Slow-Clock, Fast-Clock and Ghost Peak Attacks that are all based on the regular millisecond transmission frequency.

In this context, aspects of the disclosure regard an Ultra-Wide Band (UWB) Multi-millisecond (MMS) ranging method comprising, at a transmitting device: sending, to a receiving device, a series of successive ranging fragments at the beginning of respective first ranging slots ("transmission" slots from transmitting device perspective),
wherein each first ranging slot for the successive ranging fragments has a pseudo-random duration.

Thanks to the pseudo-random duration, a malicious device cannot anticipate the transmission time of any next ranging fragment. Hence, it is not able to perform the above attacks that require precise alignments of the illegitimate fragments with the legitimate transmission times.

Correspondingly, a communication device according to embodiments of the present disclosure comprises an Ultra-Wide Band (UWB) Multi-millisecond (MMS) ranging unit configured to send, to a receiving device, a series of successive ranging fragments at the beginning of respective first ranging slots ("transmission" slot from transmitting device perspective),
wherein each successive first ranging slot for the successive ranging fragments has a pseudo-random duration.

The device has the same advantage as the method above.

From the receiving device's perspective, aspects of the disclosure regard an Ultra-Wide Band (UWB) Multi-millisecond (MMS) ranging method comprising, at a receiving device:
receiving a series of successive ranging fragments sent by a transmitting device at the beginning of respective first ranging slots ("reception" slot from receiving device perspective),
identifying a start of each first ranging slot to retrieve the respective ranging fragment, and
accumulating channel impulse responses (CIRs) of the retrieved ranging fragments,
wherein each first ranging slot for the successive ranging fragments has a pseudo-random duration.

Correspondingly, a communication device according to embodiments of the present disclosure comprises an Ultra-Wide Band (UWB) Multi-millisecond (MMS) ranging unit configured to:
receive a series of successive ranging fragments sent by a transmitting device at the beginning of respective first ranging slots,
identify a start of each first ranging slot to retrieve the respective ranging fragment, and
accumulate channel impulse responses (CIRs) of the retrieved ranging fragments,
wherein each first ranging slot for the successive ranging fragments has a pseudo-random duration.

Optional features are defined below with reference to methods, while they can be transposed into device features.

In some embodiments, the pseudo-random duration is calculated using a key shared between the transmitting and receiving devices.

This allows the two devices to locally determine the same time of each first ranging slot, and thus accurately know respectively when transmitting the fragments and when listening for such fragments from the other device, in order to keep coherence between the ranging fragments to perform accumulation thereof.

In particular embodiments, the shared key is a Scrambled Timestamp Sequence (STS) key used by the transmitting and receiving devices to generate Ranging integrity fragments (RIF) as ranging fragments. An existing key is therefore used. Compared to using an additional key dedicated to the pseudo-random duration calculation, the above configuration avoids additional frame exchanges and saves storage resources

Alternatively, an additional key dedicated to the pseudo-random duration calculation can be used.

In some embodiments, the pseudo-random duration lasts half-millisecond (equal to 600 RSTU) plus an additional duration pseudo-randomly determined. This ensures that the (1ms-based) regulatory requirements are met. In variants, it may be contemplated pseudo-randomly modifying a half-millisecond ranging transmission/reception slot on either side (i.e., by slightly reducing it or by slightly increasing it).

In particular embodiments, the additional duration is pseudo-randomly determined within the range [0, 50µs]. Variants may consider another number of microseconds (µs) as upper bound, e.g. 25, 50, 150, 200, 250 µs.

In some embodiments, the pseudo-random duration lasts 600-RSTUs (ranging scheduling time unit) plus an additional duration pseudo-randomly determined. In IEEE P802.15.4ab/D01, one RSTU amounts to 416 chips = 416 ÷ (499.2 × 10⁶), roughly equal to 833.33ns. As 600 RSTUs amounts to half millisecond, this configuration still ensures that the regulatory requirements are met, when considering one ranging transmission (Tx) slot plus one ranging reception (Rx) slot for a TWR.

In particular embodiments, the additional duration is pseudo-randomly determined within the range [0, 50 RSTUs]. Variants may consider another number of RSTUs as upper bound, e.g. 25, 50, 150, 200, 250 RSTUs.

In some embodiments, the ranging fragments include Ranging integrity fragments (RIF). This means the RIFs are concerned by the pseudo-random duration. It is known that each RIF is made of a sequence of active STS (scrambled timestamp sequence) pulses, based on a pseud-random number generated using an STS key shared between the two devices.

In particular embodiments, the ranging fragments include Ranging sequence fragments (RSF). This means the RSFs are also concerned by the pseudo-random duration. It is known that each RSF is a repetition of a selected multi-millisecond ranging sequence (MMRS) symbol. In these embodiments, the entire UWB MMS ranging packet (i.e., RSFs and RIFs) are protected by pseudo-random ranging slot durations.

In particular embodiments, a duration between a transmission time of the last RSF and a transmission time of the first RIF is a pseudo-random duration.

In particular embodiments, the same series of pseudo-random durations is used for the first ranging slots of the RSFs and for the first ranging slots of the RIFs.

In other particular embodiments, the ranging fragments do not include a Ranging sequence fragment (RSF). This means that in scenarios with a UWB MMS Ranging Packet made of RSFs and RIFs, the RSFs can still be sent in separate (exactly) milliseconds, whereas the RIFs are protected using the pseudo-random slot durations. Only the first ranging slots of the RIFs are concerned by the pseudo-random durations.

In some TWR embodiments, the receiving device also sends (hence the transmitting device receives), to the transmitting device, a series of successive ranging fragments at the beginning of respective second ranging slots having each a pseudo-random duration, wherein the transmitting and receiving devices use the same series of pseudo-random durations for the first and second ranging slots. For instance, the n-th first ranging slot has the same random duration as the n-th second ranging slot.

In alternative TWR embodiments, the receiving device also sends (hence the transmitting device receives), to the transmitting device, a series of successive ranging fragments at the beginning of respective second ranging slots having each a pseudo-random duration, wherein the transmitting and receiving devices use different pseudo-random durations between the first ranging slots and the second ranging slots. For instance, the n-th first ranging slot has a different random duration from the n-th second ranging slot.

In particular embodiments, the ranging fragments sent by the transmitting device and the ranging fragments sent by the receiving device are interleaved (interlaced); for instance, they send them in turn (alternately). A second ranging slot succeeds to a first ranging slot, thus creating a ranging super-slot that has a pseudo-random duration compared to the conventional one millisecond duration.

Another aspect of the disclosure relates to a non-transitory computer-readable storage medium storing instructions of a computer program for implementing any method as described above.

### BRIEF DESCRIPTION OF THE DRAWINGS

Other advantages and characteristics of the invention will become apparent from the detailed description of the non-limiting embodiment and implementations and from the appended drawings in which:
[Fig. 1A] illustrates an exemplary system for one-to-one ranging using MMS UWB protocols, in accordance with some embodiments;
[Fig. 1B] illustrates an exemplary system for one-to-many ranging using MMS UWB protocols, in accordance with some embodiments;
[Fig. 2] illustrates ranging block and round structure for UWB MMS ranging;
[Fig. 3] illustrates phases of a UWB MMS ranging exchange;
[Fig. 4] illustrates a method to initiate the UWB MMS exchange in a ranging block and round structure, to perform UWB MMS based two-way ranging, in a one-to-one ranging scenario;
[Fig. 5] illustrates a conventional UWB MMS two-way ranging phase following the control phase;
[Fig. 5A] illustrates a generic MMS packet with/without NB assistance;
[Fig. 6A] illustrates a Slow-Clock Attack;
[Fig. 6B] illustrates a Fast-Clock Attack;
[Fig. 6C] illustrates a Ghost Peak Attack;
[Fig. 7] illustrates a UWB MMS ranging with pseudo-random instants of fragment transmissions, according to embodiments;
[Fig. 7A] illustrates a TWR UWB MMS ranging with pseudo-random instants of fragment transmissions, according to other embodiments;
[Fig. 7B] illustrates a TWR UWB MMS ranging with pseudo-random instants of fragment transmissions, according to other embodiments;
[Fig. 8] schematically illustrates an architecture of a communication device, adapted to carry out, at least partially, processes of the disclosure;
[Fig. 9] illustrates a hardware architecture for a device or apparatus;
[Fig. 10] illustrates, using a flowchart, UWB MMS ranging operations according to embodiments;
[Fig. 11] illustrates an exemplary pseudo-random duration unit that computes pseudo-random durations of ranging slots, according to some embodiments;
[Fig. 12] illustrates, using a flowchart, UWB MMS ranging operations according to other embodiments;
[Fig. 13] illustrates, using a flowchart, UWB MMS ranging operations according to other embodiments;
[Fig. 14] illustrates, using a flowchart, UWB MMS ranging operations according to other embodiments;
[Fig. 15] illustrates, using a flowchart, UWB MMS ranging operations according to other embodiments; and
[Fig. 16] illustrates a one-to-many ranging scenario (with two responders) according to some embodiments.

### DETAILED DESCRIPTION

An UWB MMS ranging method comprises exchanging interleaved ranging fragments between two devices, the ranging fragments sent by the same device being sent in separate ranging slots. To break the static periodicity of the ranging slots that some attacks exploit, the disclosure provides ranging slots having pseudo-random durations. The two devices operating the UWB MMS ranging share the same key such as the STS key to locally compute the pseudo-random durations. Preferably, the RIF slots are subject to pseudo-random durations, whereas it is optional for the RSF slots. The pseudo-random duration adds a pseudo-random duration selected from 0 to 50 or 100 RSTU, to the legacy half-millisecond (600 RSTU) duration.

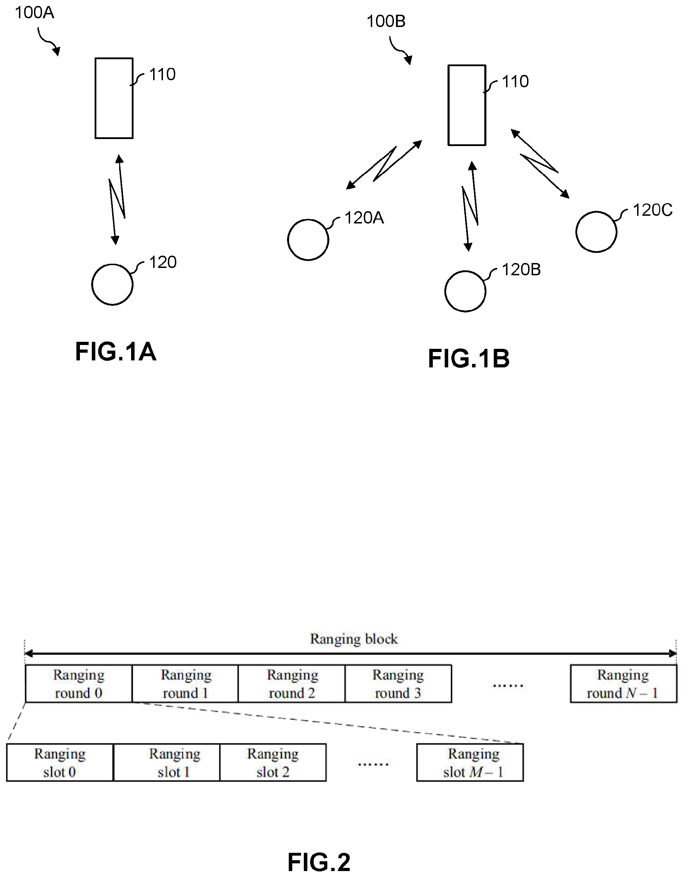

**Figure 1A** and **Figure 1B** illustrate exemplary systems for one-to-one and one-to-many ranging using MMS UWB protocols, in accordance with some embodiments of the disclosure.

System 100A of Figure 1A illustrates one-to-one ranging with initiator device or "initiator" 110 communicating with responder devices or "responder" 120. System 100B of Figure 1B illustrates one-to-many ranging with initiator device 110 communicating with responder devices 120A-120C.

Initiator 110 may comprise or be implemented as a user device, user equipment (UE), a user station, a cellular phone, a smart phone, a tablet, a personal digital assistant (PDA), a handheld device having wireless connection capability, a laptop, a car, an UWB reader or interrogator device, an entertainment device (e.g., a music or video device, or a satellite radio). Responder 120, 120A-C may comprise or be implemented as a wireless speaker, a television set, a display or television set, a tag or transponder equipping a personal item, a connected object such as an IoT (Internet of Thing) device, a car, a door locking/unlocking device, a home appliance, a cellular phone, a smart phone, a tablet, a personal digital assistant, a tablet computer, or a laptop.

Initiator 110 and responder 120, 120A-C support a UWB multi-millisecond (MMS) packet mode, which provides for improved UWB ranging sensitivity. The MMS technique accumulates the channel impulse response (CIR) estimate from a sequence of fragments which are sent in separate milliseconds to utilize the allowed per millisecond regulatory transmit power budget: maximum mean Power Spectral Density - PSD - of -41,3 dBm/MHz, i.e., -14,3 dBm over a 500 MHz bandwidth.

Initiator or responder role can be swapped depending on requirements like power consumption.

UWB MMS ranging uses the ranging block and round structure as shown in **Figure 2**.

In this Figure, a ranging block (RB) is a time period for ranging. Each ranging block consists of a whole number N of ranging rounds (RRs), where a ranging round is a period of sufficient duration to complete one entire range-measurement cycle involving the set of communication devices (initiator and responders) participating in the ranging exchange. Each ranging round is further subdivided into an integer number M of ranging slots where a ranging slot is a time period of sufficient duration for the transmission of a ranging frame or "UWB MMS Ranging Packet" in the MMS scenario. The slot duration and the number of slots making up a ranging round can be changed between ranging rounds, e.g. by the initiator.

The ranging block structure is configured for UWB MMS ranging by specifying the ranging slot duration, the ranging round duration, and the ranging block duration in RSTUs (ranging scheduling time units). As defined in IEEE P802.15.4ab/D01, one RSTU amounts to 416 chips, i.e., to 416 / (499.2 × 10⁶), roughly equal to 833.33ns.

Multiple consecutive ranging slots in a RR may be allocated for packet transmissions.

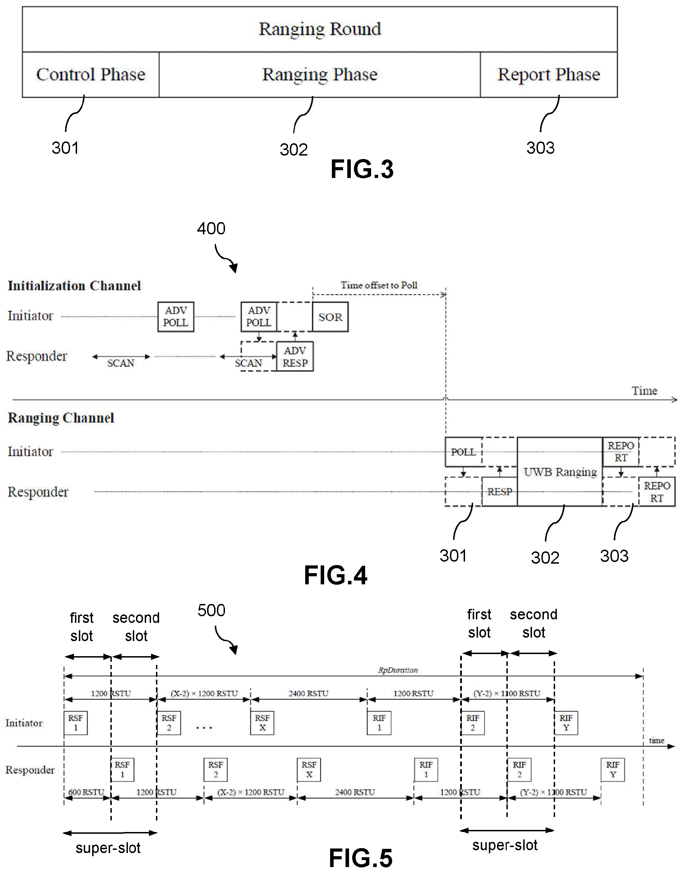

As illustrated in **Figure 3**, a UWB MMS ranging exchange consists of a control phase 301, a ranging phase 302, and an optional report phase 303, those phases being consecutive when enabled.

**Figure 4** illustrates a method to initiate the UWB MMS exchange in a ranging block and round structure, to perform UWB MMS based two-way ranging, in a one-to-one ranging scenario.

The method depicted is known as Narrowband assisted (NBA) UWB MMS method. It uses a NarrowBand (NB) channel ("Initialization Channel" in the Figure) distinct from the UWB channel ("Ranging Channel", synchronized with the NB channel, e.g. through the sharing of a common clock) to perform initialization, setup, control and report phases and to initiate switching to the UWB channel over which the UWB MMS Ranging packet exchange is performed during the ranging phase.

An alternative method not shown here is known as UWB driven MMS method, wherein the UWB channel is used to perform the control, ranging and report phases of Figure 3.

In Figure 4, to start a UWB MMS ranging session, initiator and responder engage in an initialization and setup phase 400 to negotiate a ranging configuration (Long-term operating parameters) different from the default set of parameters, to apply during a Ranging session that is based on the above ranging block and round structure.

The long-term operating parameters are negotiated by exchanging the Advertising Poll Compact (ADV POLL) frame (from the initiator) and the Advertising Response Compact (ADV RESP) frame (from the responder).

After the two-message exchange, the initiator sends a Start of Ranging (SOR) Compact frame to indicate the ranging configurations to be used and the time offset between the start of the SOR Compact frame and the start of the starting ranging block RB.

Next, when the ranging round arrives, the initiator starts the UWB MMS control phase 301 by transmitting a poll Compact (POLL) frame to the responder at the beginning of the starting ranging slot of a ranging round. The responder that receives the poll Compact frame successfully transmits a response Compact (RESP) frame back to the initiator beginning in the ranging slot following the poll period.

After successfully transmitting/receiving the response, the initiator and responder continue the UWB MMS ranging round and enter the ranging phase 302.

The initiator may indicate (in the poll Compact frame) long-term operating parameters to replace existing long-term operating parameters or short-term operating parameters for the current ranging round and optionally request that the responder suggests long-term operating parameters or short-term operating parameters for the next ranging round. The poll Compact frame may include a Long-Term Parameters Update subfield to signal whether the frame relates to long-term or short-term operating parameters.

After receiving the poll Compact frame including long-term or short-term operating parameters, the responder locally updates its long-term or short-term operating parameters accordingly, that take effect at the end of the poll Compact frame. Updated short-term operating parameters are only applicable to the current ranging round (after which the long-term operating parameters are restored).

Correspondingly, the response Compact frame may include suggested long-term or short-term operating parameters that the initiator may make use to determine updated long-term or short-term operating parameters to be used as from the next ranging round. New short-term operating parameters are only applicable to the next ranging round (after which the long-term operating parameters are restored).

UWB driven MMS ranging also includes an initialization and setup phase conducted over a separate channel known as Out-of-Band (OOB) channel, control and ranging and report phases over UWB.

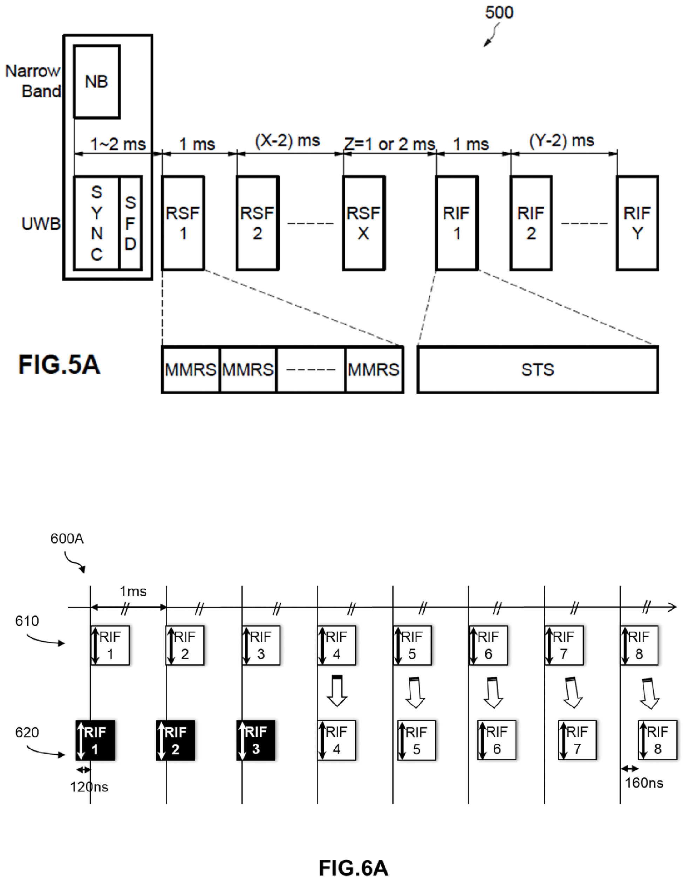

**Figure 5** illustrates a conventional UWB MMS two-way ranging phase 500 following the control phase.

The initiator and the responder exchange a series of ranging fragments, each ranging fragment being sent in turn by the devices, each device sending its successive ranging fragments in separate and alternate half-millisecond slots. In other words, for two-way ranging (TWR) with UWB MMS Ranging packets, the fragment transmissions forming the transmitted UWB MMS Ranging packet are interleaved with fragment receptions of the received UWB MMS response packet.

As shown, each millisecond ranging "super-slot" is made of a first ranging slot and a second ranging slot of same duration, namely half-second. The first ranging slot is a "transmission" or "Tx" slot for the initiator, while it is a "reception" or "Rx" slot for the responder. Correspondingly, the second ranging slot is a "transmission" or "Tx" slot for the responder, while it is a "reception" or "Rx" slot for the initiator.

Exemplary fragments include RSFs (ranging sequence fragments), as defined e.g. in IEEE P802.15.4ab/D01, section 16.2.11.2. Each RSF consists of a repetition of a selected multi-millisecond ranging sequence (MMRS) symbol. One common MMRS is utilized in all RSFs and all RSFs have the same number of repetitions of the MMRS. The MMRS defines the polarities (+ or -) of the pulses to be sent.

Other exemplary fragments include RIFs (Ranging integrity fragments) as defined e.g. in IEEE P802.15.4ab/D01, section 16.2.11.3. Each RIF consists of a sequence of active Scrambled timestamp sequence (STS) pulses iteratively generated and encoded using a Ranging key (or STS key) shared between the initiator and the responder. Each RIF carries STS waveform of pseudo-randomly modulated pulses for ranging integrity. The polarities of all STS pulse in all RIFs within one MMS UWB packet are generated by using a DRBG (deterministic random bit generator) based on AES-128 (using the STS key) in counter mode.

One MMS UWB ranging packet can be either an RSF-only MMS, RIF-only MMS, or a mixed MMS. An RSF-only MMS packet format enables efficient and fast CIR generation with multi-millisecond coherent combining. In a mixed MMS packet format for ranging integrity, RIFs may follow RSFs. An RIF-only MMS packet only contains RIFs.

As shown in the scenario of the Figure, the initiator transmits X RSF fragments starting its first fragment at the start of the ranging phase, with each subsequent RSF fragment starting 1200 RSTU from the start of the previous one: the RSF fragments are transmitted by the initiator at the start of successive first ranging slots. The initiator starts transmitting a first RIF fragment at the start of the ranging phase if no RSF fragments are present, or two milliseconds (2400 RSTU) after the start of its last RSF fragment transmission otherwise. The initiator continues to send Y RIF fragments at regular intervals of 1200 RSTU: the RIF fragments are transmitted by the initiator at the start of successive first ranging slots.

Symmetrically (for the two-way ranging), the responder starts transmitting a first RSF fragment at 600 RSTU into the ranging phase, and sends X RSF fragments at regular intervals of 1200 RSTU (as the initiator): the RSF fragments are transmitted by the responder at the start of successive second ranging slots. The responder starts transmitting a first RIF fragment at 600 RSTU into the ranging phase if no RSF fragments were transmitted, or two milliseconds (2400 RSTU) after the start of its last RSF fragment transmission otherwise. The responder continues to send Y RIF fragments at regular intervals of 1200 RSTU: the RIF fragments are transmitted by the responder at the start of successive second ranging slots.

It results in that both first and second ranging slots are 600 RSTU, and that the ranging frames of the initiator and responders are interleaved as apparent from the Figure.

The numbers X and Y are operating parameters, either defined by default, or as long-term operating parameters (during the initialization phase or any update) or as short-term operating parameters (during the control phase). The short-term operating parameters (if any defined) replace the long-term operating parameters for a specific RR, whereas the long-term operating parameters (if any defined) replace the default ones for a specific Ranging session.

The total duration of the UWB MMS ranging phase is RpDuration which is an operating parameter too.

**Figure 5A** provides an illustration of a generic MMS packet with/without NB assistance. This UWB MMS ranging exchange is one-way ranging, without interleaved MMS. Two-way ranging may also be without interleaving when the initiator transmits all its RSFs or RIFs or both before the responder transmits all its RSFs or RIFs or both, respectively.

The same pulse shape is used for the entire MMS packet and all the pulses within one MMS packet are modulated with a constant amplitude. Blocks NB and SYNC-SFD are shown to illustrate initial timing/frequency synchronization between the devices in order to trigger the ranging phase.

By denoting T₀ the start timing of the first UWB MMS fragment (either RSF or RIF), the start timing of the x-th RSF and the y-th RIF can be determined as follows.

When X>0, there exists at least 1 RSF:
Start timing of RSF-x in unit of ms: (x-1)+T₀
Start timing of RIF-y in unit of ms: (y-1)+T₀+(X-1)+Z, where Z is the time between the last RSF and the first RIF (e.g. 2 ms or 2400 RSTUs).

When X=0, there are no RSFs:
Start timing of RIF-y in unit of ms: (y-1)+T₀.

The expression in parentheses and Z can be multiplied by 1200 to express the start timing in RSTUs.

One RSF-RMARKER can be added as a peak of the first pulse in the first RSF, to facilitate incremental processing gain. Additional RIF-RMARKERs can be added as a peak of the first pulse and a peak of the last pulse in each RIF, to assist timing/frequency synchronization and secure ranging.

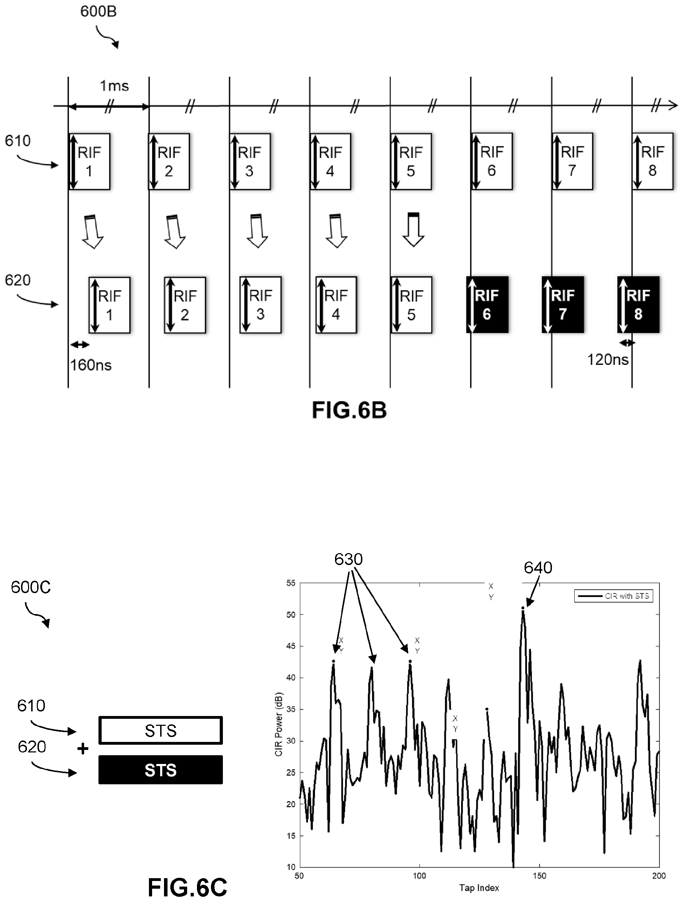

**Figure 6A**, **Figure 6B** and **Figure 6C** illustrate known Slow-Clock, Fast-Clock and Ghost Peak Attacks respectively. The arrows in the fragments of the two first figures illustrate the above RIF-RMARKERs.

As shown in Figure 6A, the Slow-Clock Attack 600A consists for the malicious device to use a fragment transmission frequency that is slightly slowed down (e.g., about 40 ppm) compared to the standardized 1 kHz frequency (millisecond slots).

It tries to intercept the legitimate fragments 610 (here RIFs) to resent them to the legitimate reader in order to mimic the legitimate device. Thanks to the slow frequency, the first malicious fragments 620 (in black) that have to be sent slightly in advance compared to the legitimate fragments cannot reproduce the legitimate fragments. However, with the frequency shift, it comes a time where the malicious device can obtain the legitimate fragments and resent them, as shown in white malicious fragments 620.

Figure 6B shows the Fast-Clock Attack 600B which operates in the reverse way due to, in that case, a fragment transmission frequency that is slightly sped up (e.g., about 40 ppm) compared to the standardized 1 kHz frequency. The legitimate fragments can be resent first, before the malicious device becomes in advance compared to the legitimate fragments, and is unable to duplicate them on time.

These attacks can succeed thanks to the UWB MMS tolerance to some erroneous fragments. Indeed, the receiving devices can discard erroneous fragments (e.g., RIFs that do not comply with the STS key) from the accumulated CIR.

Figure 6C illustrates the Ghost Peak Attack 600C where a malicious fragment 620 (with some pulses) is transmitted simultaneously to the legitimate fragment 610 (usually a RIF) in order to introduce one or more additional noise peaks in the CIR of the fragment. The operation can be repeated over successive fragments to add one or more significant fake peaks 630 in the accumulated CIR that can be misinterpreted as a fake first path, not corresponding to the true peak 640 (true first path).

To make the UWB MMS ranging more robust against these attacks, embodiments of the present disclosure dynamically change when the fragments are sent, compared to the static millisecond offset defined by the first (or second) ranging slots in which successive fragments are sent. Therefore, it becomes harder for any malicious device to fake a clock drift or to insert strong pulses synchronized at the PHY level with an unpredictable (content and the instant of transmission) fragment.

In this respect, it is provided that each first (and/or second) ranging slot at which a next ranging fragment is sent has a pseudo-random duration.

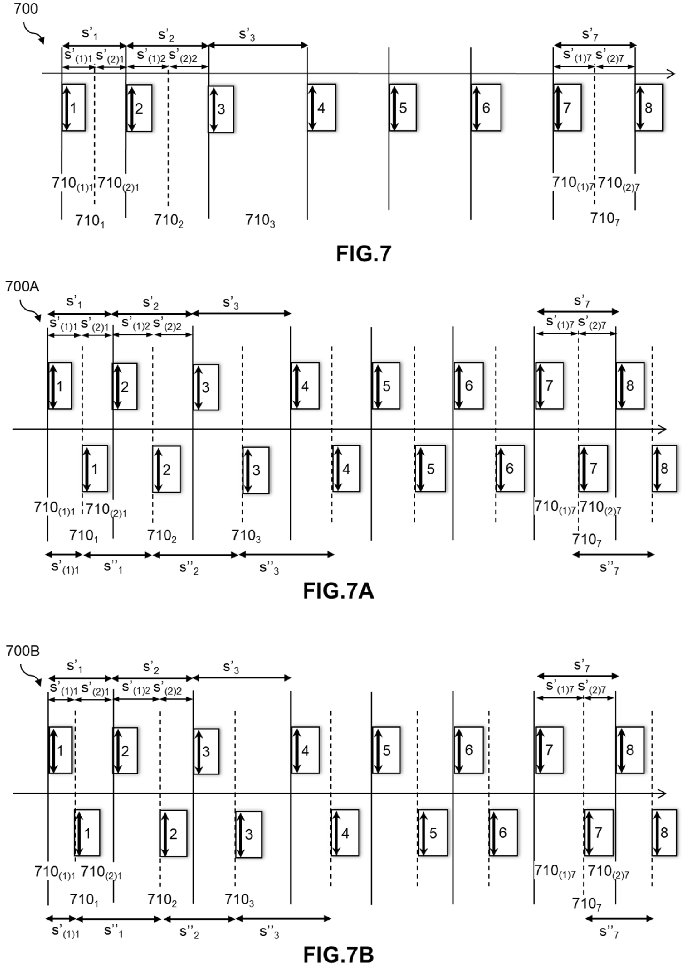

**Figure 7** illustrates a UWB MMS ranging 700 with pseudo-random instants of fragment transmissions, according to embodiments. The fragments (e.g., RIFs) are numbered from 1 to 8 in the Figure.

The series of successive ranging fragments (RIF1 to RIF8) are sent at the beginning of respective successive ranging slots 710₍₁₎₁ to 710₍₁₎₈ within ranging super-slots 710₁ to 710₈. 710₍₁₎ reference the first ranging slot (in each ranging super-slot 710) where the initiator transmits its fragment and the responder receives such fragment from the initiator, whereas 710₍₂₎ reference the second ranging slot (in each ranging super-slot 710) where the responder transmits its fragment and the initiator receives such fragment from the responder.

Contrary to IEEE P802.15.4ab/D01, the ranging super-slots 710ₙ are not fixed at each millisecond, but are separated by respective pseudo-random duration s'ₙ, resulting from pseudo-random durations s'₍₁₎ₙ and/or s'₍₂₎ₙ defining the first and second ranging slots 710₍₁₎ₙ, 710₍₂₎ₙ.

Preferably, to meet the millisecond-based regulatory requirements, durations s'₍₁₎ₙ and/or s'₍₂₎ₙ are higher than half millisecond, meaning that any s'₍₁₎ₙ and/or s'₍₂₎ₙ lasts half-millisecond (or 600 RSTUs) plus an additional duration pseudo-randomly determined. Of course, variants may allow the durations s'₍₁₎ₙ and/or s'₍₂₎ₙ to be lower than one millisecond, e.g. s'₍₁₎ₙ and/or s'₍₂₎ₙ belong to [0.5ms - ε, 0.5ms + ε], where 2ε is the range of duration variability. Alternatively, s'₍₁₎ₙ and/or s'₍₂₎ₙ belong to [0.5ms - ε, 0.5ms + ε'] with ε different from ε' (e.g., ε strictly lower than ε', ε = ε'/k with k an integer), meaning that the variability in durations lower than 1ms is different from the variability in durations higher than 1ms.

In the preferred embodiments, s'₍₁₎ₙ and/or s'₍₂₎ₙ belong to [0.5, 0.5 + ε] in unit of milliseconds or [600, 600 + δ] in RSTU. Illustratively, ε may be 25, 50, 100, 150, 200, 250 µs, or δ may be 25, 50, 100, 150, 200, 250 RSTUs.

**Figure 7A** illustrates a TWR UWB MMS ranging 700A with pseudo-random instants of fragment transmissions, according to embodiments. The Figure shows two series of interleaved ranging fragments exchanged by two devices, which may be an initiator and a responder.

In this scenario, the two devices use the same pseudo-random durations for the first ranging slots 710₍₁₎ₙ and the second ranging slots 710₍₂₎ₙ: s'₍₁₎ₙ = s'₍₂₎ₙ.

In other words, the first and second ranging slots that correspond to the same n-th fragment, i.e., slot 710₍₁₎ₙ for the first device and slot 710₍₂₎ₙ for the second device, have the same duration s'₍₁₎ₙ = s'₍₂₎ₙ.

Pseudo-random duration s'ₙ of the ranging super-slot 710ₙ is therefore 1ms adjusted with twice the additional duration mentioned above. The {s'ₙ} are however different due to the different additional durations that are added for the ranging super-slots respectively.

In other embodiments (not shown), s'₍₁₎ₙ₊₁ = s'₍₂₎ₙ. In that case, the (n+1)-th fragment sent by either device is transmitted after the same s'ₙ duration elapses following the transmission of the n-th fragment: s'ₙ defining the duration between the starting time of two consecutive fragments (n and n+1) from the initiator is equal to s"ₙ defining the duration between the starting time of corresponding two consecutive fragments (n and n+1) from the responder. The two series are shifted one from the other by a duration s'₍₁₎₁.

In some embodiments, the durations s'₍₁₎ₙ and/or s'₍₂₎ₙ to be used can be exchanged between the devices during the initialization phase or the control phase (e.g., as long-term or short-term operating parameters).

Preferably, they are locally computed by the devices using a pseudo-random duration unit (reference 826 below) and the same key (reference 827). In this respect, the key may be shared between the two devices, e.g. during the initialization phase or the control phase.

In some embodiments that avoid additional frames to be exchanged, the STS key described above can be used to compute the durations s'₍₁₎ₙ and/or s'₍₂₎ₙ.

**Figure 7B** illustrates a TWR UWB MMS ranging 700B with pseudo-random instants of fragment transmissions, according to embodiments. Similar to Figure 7A, the Figure shows two series of interleaved ranging fragments exchanged by two devices, which may be an initiator and a responder.

In this scenario, the two devices use different pseudo-random durations between the first ranging slots 710₍₁₎ₙ and the second ranging slots 710₍₂₎ₙ, meaning that s'₍₁₎ₙ is usually different from s'₍₂₎ₙ (indeed, pseudo-random generation may occasionally result in having s'₍₁₎ₙ = s'₍₂₎ₙ, but with very low probability to occur once in a ranging phase and with no chance to happen twice during the same ranging phase).

In other words, the first and second ranging slots that correspond to the same n-th fragment, i.e., slot 710₍₁₎ₙ for the first device and slot 710₍₂₎ₙ for the second device, have different durations s'₍₁₎ₙ and s'₍₂₎ₙ respectively.

In embodiments, different durations (s'₍₁₎ₙ, s'₍₂₎ₙ) are used within all pairs of corresponding first and second ranging slots (710₍₁₎ₙ, 710₍₂₎ₙ). In other embodiments, only a part of the pairs uses different durations s'₍₁₎ₙ and s'₍₂₎ₙ, meaning that some pairs may use the same duration. For example, RIFs may use the same pseudo-random duration whereas RSFs may use different pseudo-random durations. Reversely, RSFs may use the same pseudo-random duration whereas RIFs may use different pseudo-random durations.

Although Figures 7, 7A and 7B show that the ranging fragments concerned by the pseudo-random durations (hence pseudo-random instants of transmission) are or include Ranging integrity fragments (RIF), the concerned ranging fragments may also include Ranging sequence fragments (RSF). All the ranging fragments of the UWB MMS ranging packet (except the first one which is transmitted at T₀) may be transmitted at the expiry of a pseudo-random duration following the transmission of the previous ranging fragment.

In some embodiments, the duration Z between the transmission time of the last RSF and the transmission time of the first RIF can also be a pseudo-random duration following the same rules as described herewith for s'ₙ, s'₍₁₎ₙ and s'₍₂₎ₙ. In variants, Z may be fixed (e.g., 1ms or 2ms, i.e., 1200 RSTUs or 2400 RSTUs).

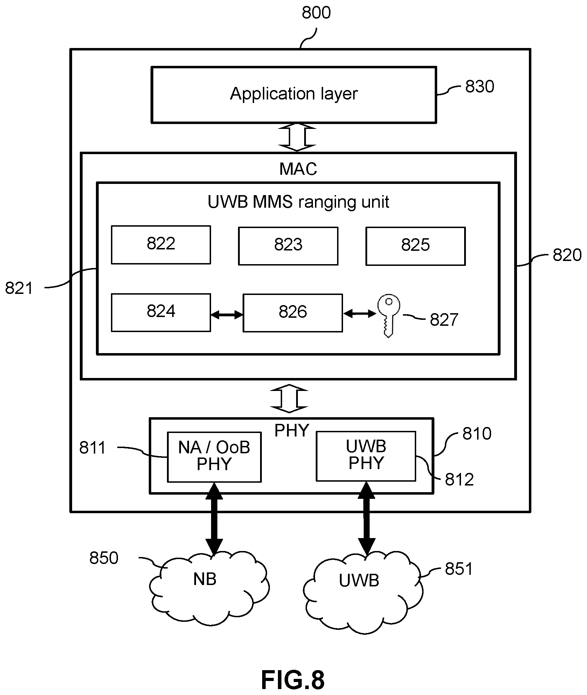

**Figure 8** schematically illustrates an architecture of a communication device, adapted to carry out, at least partially, processes of the disclosure.

Device 800 comprises a physical (PHY) layer block 810, compatible with the 802.15.4 family of standards (e.g. 802.15.4, 802.15.4z and 802.15.4ab standard) that formats, modulates on or demodulates from wireless channels. The PHY layer 810 includes a NA/OoB PHY unit 811 to operate PHY communications over the NA (or OoB) channel 850 in relation to initialization and signalling operations as described above, and includes an UWB PHY unit 812 to operate PHY communications over the UWB channel 851 in relation to UWB operations as described above.

The PHY layer 810 is interfaced with a MAC layer block 820 which implements 802.15.4, 802.15.4z and 802.15.4ab standard.

MAC layer block 820 includes a UWB MMS ranging unit 821. UWB MMS ranging unit 821 includes initialization unit 822 to drive initialization and setup operations, control unit 823 to drive control operations during the control phase 301, ranging unit 824 to drive ranging operations during the ranging phase 302, report unit 825 to drive report operations during the report phase 303 if enabled, and pseudo-random duration unit 826 to compute the durations s'ₙ, s''ₙ, s'₍₁₎ₙ and/or s'₍₂₎ₙ based on key 827.

Ranging unit 824 interacts with pseudo-random duration unit 826 in order to calculate, obtain and apply the durations s'ₙ, s''ₙ, s'₍₁₎ₙ and/or s'₍₂₎ₙ when transmitting ranging fragments and/or receiving ranging fragments. Exemplary computation and use of the pseudo-random durations are explained below

The MAC layer 820 is interfaced with an application layer block 830 which runs an application that generates and receives data packets, for example packets for distance measurements. Application layer block 830 schematically represents all the stack layers above the MAC layer.

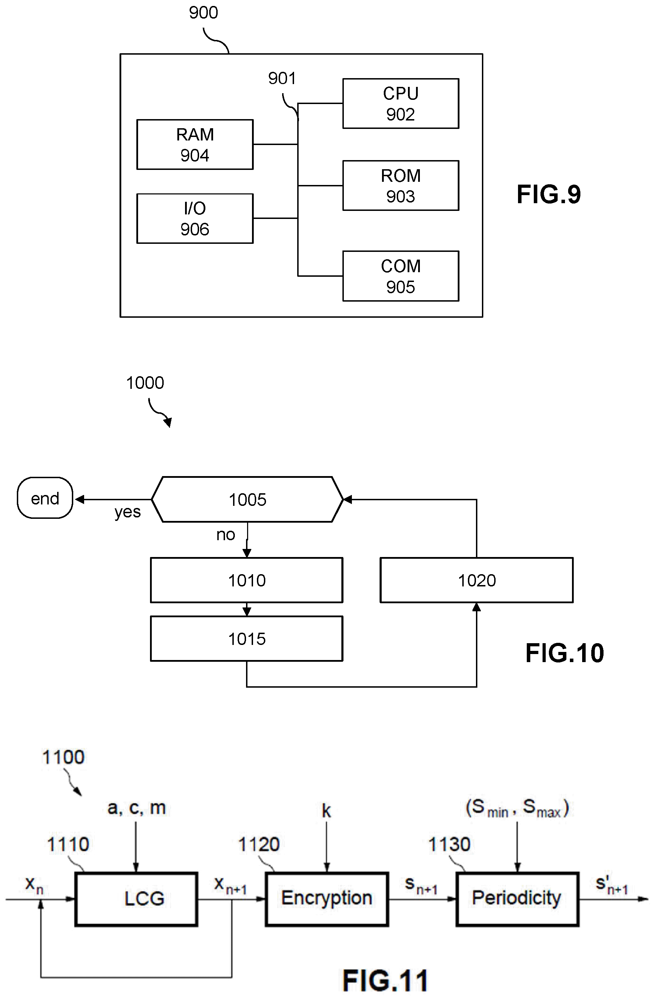

**Figure 9** illustrates a hardware architecture for any device or apparatus described above, in particular any device of Figure 1A or 1B.

Device 900 comprises an internal communication bus 901 to which are preferably connected:
- one or more central processing units 902, such as one or more CPU processors or microprocessors;
- a storage memory 903 - typically ROM and/or hard disk and/or flash memory - for storing computer programs intended to implement all or some of the operations described above;
- a random access memory (RAM) 904, for storing the executable code of the computer programs as well as the registers adapted to record the variables and parameters necessary for their execution;
- one or more communication interfaces 905 to communicate over wireless channels, such as an UWB channel, a NB / OoB channel; and
- one or more I/O 906 inputs/outputs enabling a user or administrator to interact with the computer programs, both in configuration and in operation. Typically, the inputs/outputs may include a screen serving as a graphical interface with the user and/or a keyboard or any other pointing means enabling the user to interact.

The executable code stored in memory 903 may be received by means of the communication network, via interface 905, to be stored therein prior to execution. Alternatively, the executable code is not stored in non-volatile memory 903 but can be loaded into volatile memory 904 from a remote server via the communication network for direct execution.

The central processing unit 902 is preferably adapted to control and direct the execution of the instructions or parts of the software code of the computer program(s). On power-up, the program or programs that are stored in non-volatile memory 903 or on the remote server are transferred/loaded into random access memory 904, which then contains the executable code of the program or programs, as well as registers for storing variables and parameters necessary for implementing the methods.

**Figure 10** illustrates, using a flowchart, UWB MMS ranging operations according to embodiments, at any device of Figure 1A or 1B. Process 1000 sends the ranging fragments at pseudo-random transmission times.

The process takes place when the device exchanges a series of ranging fragments with a receiving device during a ranging phase 302/500/700. In a TWR, each ranging fragment is sent in turn by the devices, resulting in interleaved communication.

The transmission time t₁ of the first fragment is known in advance, either because it is T₀ (first fragment of the UWB MMS ranging packet) or because it is after duration Z (known) for RIFs following RSFs. The process is initialized with index n=0.

Step 1005 consists for the transmitting device to consider the next ranging fragment to be sent if any: n=n+1 (n=1 at the first iteration), and to determine whether all the ranging fragments have been yet sent.

In the negative, the device obtains at step 1010 the next ranging fragment n (n=1 to X or Y or X+Y), either by generating it or retrieving it from memory if previously generated. For a RSF, the sequence of MMRS is generated. For a RIF, it means the device generates the corresponding STS sequence using the STS key shared with the receiving device.

Next, at step 1015, the device sends the generated ranging fragment at tₙ wherein tₙ=t₁ for the first fragment and:
* tₙ=tₙ₋₁+s'ₙ₋₁ for the next fragments at the initiator, i.e., tₙ=tₙ₋₁+s'₍₁₎ₙ₋₁+s'₍₂₎ₙ₋₁, or
* tₙ=tₙ₋₁+s"ₙ₋₁ for the next fragments at the responder, i.e., tₙ=tₙ₋₁+s'₍₂₎ₙ-₁+s'₍₁₎ₙ.
s'₍₂₎ₙ₋₁ and s'₍₁₎ₙ can be calculated by the transmitting device - initiator and responder respectively - in the same way as the other device does at step 1020.

At step 1020, the device calculates the pseudo-random duration s'₍₁₎ₙ or s'₍₂₎ₙ of the current MMS (first or second) slot 710₍₁₎ₙ or 710₍₂₎ₙ, and then loops back to step 1005 to consider the next fragment if any: n=n+1.

**Figure 11** illustrates an exemplary pseudo-random duration unit 1100 that computes the pseudo-random durations s'₍₁₎ₙ₊₁ or s'₍₂₎ₙ₊₁ of the ranging slots 710ₙ, according to some embodiments.

Linear Congruential Generator (LCG) 1110 generates a pseudo-random number xₙ₊₁ as *x*_{*n*+1} *=* (*axₙ + c*)*mod m*, where m > 0 is the modulus, a is the multiplier, c is the increment and xₙ is the current seed. x₀ may be predefined and known by both the transmitting and receiving devices, as well as a, c and m. The generated xₙ₊₁ becomes the next seed.

The LCG is used here for illustrative purposes only, and can therefore be replaced by any other pseudo-random number generator algorithm.

The encryption unit 1120 part is used to protect the generated pseudo-random value, hence the next ranging fragment. Any secure encryption method can be used to generate output s₍₁₎ₙ₊₁ or s₍₂₎ₙ₊₁ with the combination of key k 827 and xₙ₊₁. As an example, an AES-128 can be used.

Next, the periodicity block 1130 is used to generate duration s'₍₁₎ₙ₊₁ (resp. s₍₂₎ₙ₊₁) from s'ₙ (resp. s₍₂₎ₙ). The minimum and maximum duration values, S₍₁₎ₘᵢₙ and S₍₁₎ₘₐₓ (resp. S₍₂₎ₘᵢₙ and S₍₂₎ₘₐₓ, which may be equal to S₍₁₎ₘᵢₙ and S₍₁₎ₘₐₓ, or not), may be predefined. Examples above have considered Sₘᵢₙ=0.5ms or 600RSTU or 1ms - ε or 600 RSTU - ε. Examples above have considered Sₘₐₓ=0.5ms + ε or 0.5ms + ε' or 600 RSTU + ε or 600 RSTU + ε'. For example, Sₘᵢₙ=600 RSTU and Sₘₐₓ=650 RSTU. One may notice that the variability in durations (tens of RSTUs corresponding to meters) is much greater than the variability in measurements (in centimeters). Therefore, any known attack will not be discarded due to measurement tolerance.

Duration s'₍₁₎ₙ₊₁ (resp. s₍₂₎ₙ₊₁) can be obtained using the following formula: $s {′}_{\left(1\right) n + 1} = \left⌊{S}_{\left(1\right) min}+\left({S}_{\left(1\right) max}-{S}_{\left(1\right) min}\right).\frac{{S}_{\left(1\right) n + 1}}{{MAX}_{VAL}}\right⌋$ where MAX_VAL is the maximum possible value of {s₍₁₎ᵢ} given the LCG 1110 and the encryption unit 1120.

In other embodiments, the NbaPrng(key, data) function can be used to generate s'₍₁₎ₙ₊₁ or s'₍₂₎ₙ₊₁. NbaPrng is described in section 10.39.8.4.3 of P802.15.4ab/D02 (March 2025). This function is also based on the AES-128 block cipher, where the inputs 'key' is the seed value of the macMmsPrngSeed attribute, and 'data' is the index of the fragment, called MmsFragmentIndex. Intermediary variable PrngValue is given by bits 0 to 31 of NbaPrng (macMmsPrngSeed, MmsFragmentIndex). PrngValue is then mapped to the range of allowed values between Smin and Smax, resulting in desired s'₍₁₎ₙ₊₁ or s'₍₂₎ₙ₊₁. The mapping function is calculated independently by both the initiator and the responder based on the same values of the applicable parameters pre-established during the setup phase.

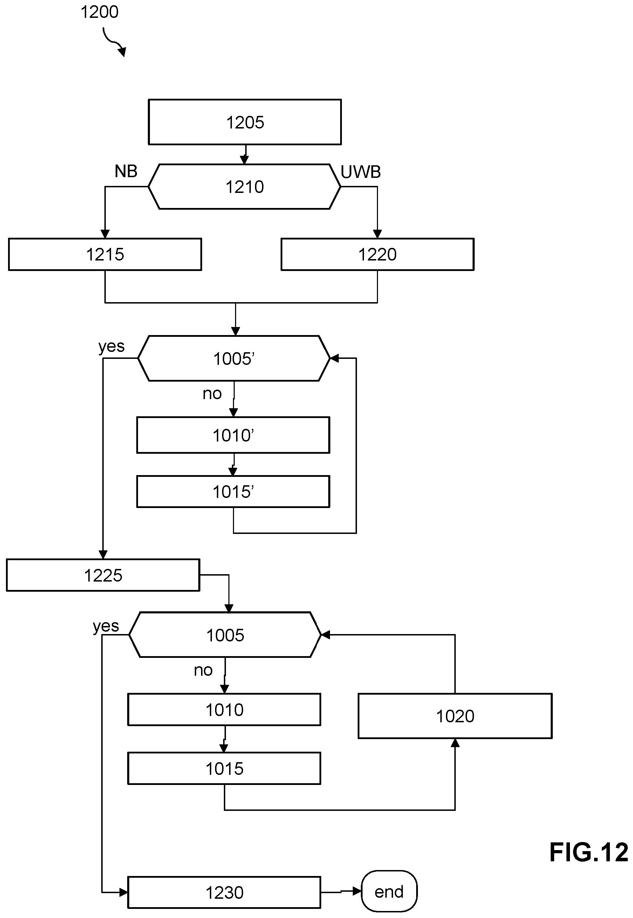

**Figure 12** illustrates, using a flowchart, UWB MMS ranging operations according to other embodiments, at any device of Figure 1A or 1B. Process 1200 sends the RIFs at pseudo-random transmission times, but not the RSFs.

At step 1205, initialization of the device is conducted, which may include exchanging key 827 with another device with which the ranging is to be made.

At step 1210, the device determines whether a NBA UWB MMS method or a UWB driven MMS method is implemented.

In the first case, the initialization step is performed with the other device at step 1215, where the POLL and RESP frames are exchanged, in order to control the ranging. This step may include exchanging UWB MMS operating parameters.

In the second case, initialization and trigger of the ranging is performed at step 1220 with the exchange of the SYNC/SFD fragment with the other device.

Following step 1215 or 1220, steps 1005'-1015' are performed to send the X RSFs if X is not zero. At step 1005', the device considers the next RSF if any: n=n+1 (n=1 at the first iteration), and determines whether all the RSFs have been yet sent.

In the negative, the device obtains at step 1010' the next ranging RSF n, either by generating it or retrieving it from memory if previously generated.

Next, at step 1015', the device sends the generated ranging fragment at time 1200(n-1)+T₀ in RSTUs.

It then loops back to step 1005' to consider the next RSF if any: n=n+1.

Therefore, the RSFs are sent without pseudo-random transmission times, but in millisecond offsets.

When there is no more RSF to be sent, the device waits (step 1225) for duration Z, typically 2400 RSTU.

It is now time to send the RIFs at transmission times tₙ based on pseudo-random durations s'₍₁₎ₙ₊₁ or s'₍₂₎ₙ₊₁ depending on the role of the transmitting device as initiator or responder respectively. This is steps 1005-1020 already described with reference to Figure 10 that are applied to RIFs.

When there is no more RIF to be sent, the device can enter the report phase 303 (step 1230) if enabled.

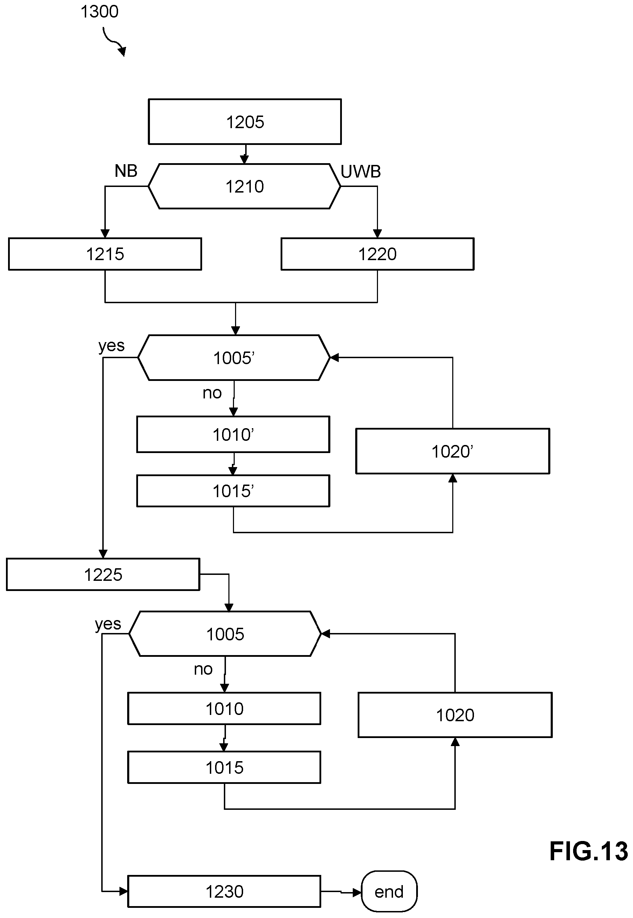

**Figure 13** illustrates, using a flowchart, UWB MMS ranging operations according to other embodiments, at any device of Figure 1A or 1B. Process 1300 sends both the RSFs and RIFs at pseudo-random transmission times.

Steps 1205-1220 remain unchanged, as well as steps 1005'-1015'. Following step 1015' is step 1020' similar to step 1020 where the device calculates the pseudo-random duration s'₍₁₎ₙ₊₁ or s'₍₂₎ₙ₊₁ for the current RSF slot 710_{(1)n or} 710₍₂₎ₙ, before looping back to step 1005' to consider the next RSF if any: n=n+1.

Note that the same series of s'ₙ can be used for the RSFs and for the RIFs, to reduce computation complexity.

Next, steps 1225, 1005-1020 and 1230 remain unchanged.

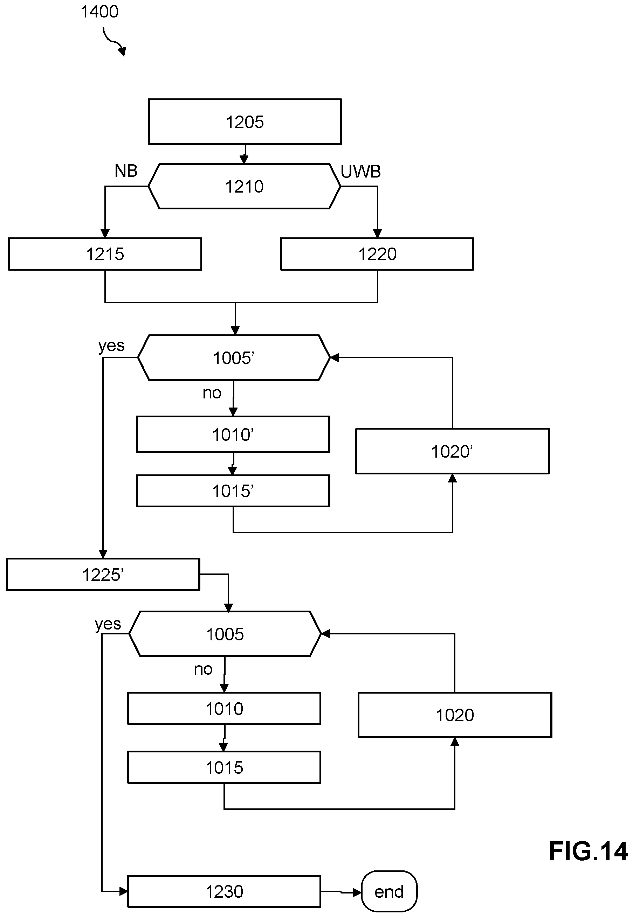

**Figure 14** illustrates, using a flowchart, UWB MMS ranging operations according to other embodiments, at any device of Figure 1A or 1B. Process 1400 sends both the RSFs and RIFs at pseudo-random transmission times, and use a pseudo-random duration between the RSFs and the RIFs.

Steps 1205-1220 and 1005'-1020' remain unchanged.

When there is no more RSF to be sent, the device calculates a pseudo-random duration Z' and waits for that duration (step 1225').

Next, steps 1225, 1005-1020 and 1230 remain unchanged.

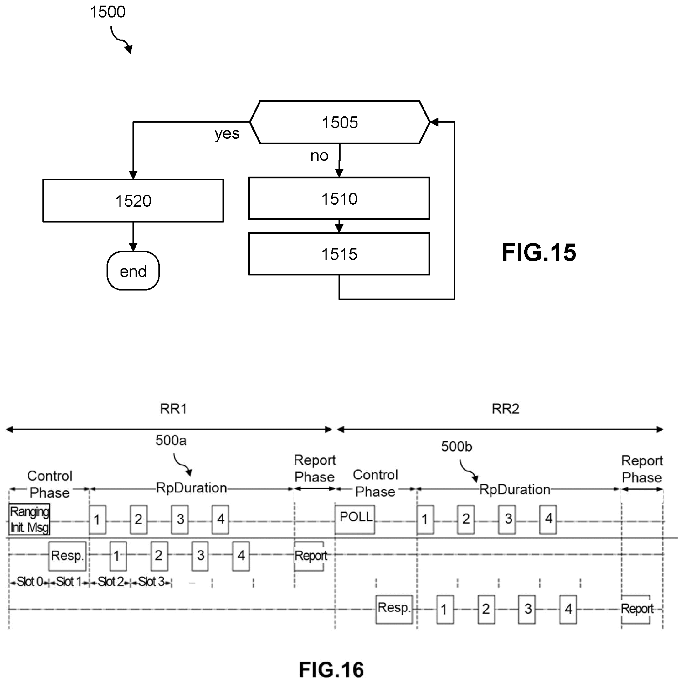

**Figure 15** illustrates, using a flowchart, UWB MMS ranging operations according to other embodiments, at any device of Figure 1A or 1B.

Process 1500 takes place when the device exchanges a series of ranging fragments with a transmitting device during a ranging phase 302/500/700. In a TWR, each ranging fragment is sent in turn by the devices, resulting in interleaved communication.

The transmission time t₁ of the first fragment is known in advance, either because it is T₀ (first fragment of the UWB MMS ranging packet) or because it is after duration Z (known) for RIFs following RSFs. The process is initialized with index n=0.

Step 1505 consists for the transmitting device to consider the next ranging fragment to be sent if any: n=n+1 (n=1 at the first iteration), and to determine whether all the ranging fragments have been yet received.

In the negative, the device identifies at step 1510 a start of the current ranging slot 710₍₁₎ₙ or 710₍₂₎ₙ to retrieve the ranging fragment. It corresponds to t₁ for the first fragment and to tₙ=tₙ₋₁+s'ₙ₋₁ for the next fragments. Therefore, step 1510 includes calculating the pseudo-random durations s'₍₁₎ₙ and s'₍₂₎ₙ for the initiator or s'₍₂₎ₙ and s'₍₁₎ₙ₊₁ for the responder of the current MMS slot 710₍₁₎ₙ or 710₍₂₎ₙ using key 827.

Next, at step 1515, the device receives ranging fragment n which has been transmitted at tₙ (beginning of slot 710ₙ). Next, the device loops back to step 1505 to consider the next fragment if any: n=n+1.

When there is no more ranging fragments to be received, the device can accumulate the CIRs of all received fragments, using conventional techniques. This is step 1520.

The process 1500 of Figure 15 can be extended to the RSF-RIF distinction as proposed above with reference to Figure 12, Figure 13 or Figure 14. The skilled person is able to adapt the process (transmission side) of these Figures to the receiving side.

**Figure 16** illustrates a one-to-many ranging scenario (with two responders) according to some embodiments.

The first ranging phase 500a (in the first Ranging Round RR1) is defined for ranging with a first responder. The second ranging phase 500b (in the second Ranging Round RR2) is defined for ranging with a second responder.

The use of pseudo-random durations s'ₙ, s''ₙ, s'₍₁₎ₙ and s'₍₂₎ₙ as described above for the RSF and/or RIF slots 710ₙ, 710₍₁₎ₙ and 710₍₂₎ₙ can be used in any or both ranging phases 500a, 500b.

Independent pseudo-random durations can be used between the two ranging phases. In variants, the same series of pseudo-random durations can be used over multiple ranging phases corresponding to multiple responders. In that case, a group key 827 can be shared between these multiple devices.

The UWB MMS ranging with pseudo-random durations of MMS slots according to the present disclosure allows the MAC layer to pseudo-randomly schedule communications using a shared key. Thanks to this, only devices sharing the same key can predict when the next MMS communication attempts occur (in transmission and in reception).

The proposed mechanism has low complexity and increases the level of security of MMS ranging: a malicious device can no longer predict when the MMS fragments occur for fast/slow clock attacks; furthermore as a malicious device does not know when the MMS fragment is starting, it highly increases the complexity of the ghost peak attack as the sequence of strong UWB pulses (PRF=7.8MHz) has to get synchronized with the legitimate STS.

Lastly, the proposed mechanism improves coexistence of two MMS ranging in the same area as the transmission of each fragment is pseudo-periodic with different random values.

Although the present invention has been described hereinabove with reference to specific embodiments, the present invention is not limited to the specific embodiments, and modifications will be apparent to a skilled person in the art which lie within the scope of the present invention.

## Claims

1. An Ultra-Wide Band (UWB) Multi-millisecond (MMS) ranging method comprising, at a transmitting device: sending, to a receiving device, a series of successive ranging fragments at the beginning of respective first ranging slots,
wherein each first ranging slot for the successive ranging fragments has a pseudo-random duration.

2. An Ultra-Wide Band (UWB) Multi-millisecond (MMS) ranging method comprising, at a receiving device:
receiving a series of successive ranging fragments sent by a transmitting device at the beginning of respective first ranging slots,
identifying a start of each first ranging slot to retrieve the respective ranging fragment, and
accumulating channel impulse responses (CIRs) of the retrieved ranging fragments,
wherein each first ranging slot for the successive ranging fragments has a pseudo-random duration.

3. The method of Claim 1 or 2, wherein the pseudo-random duration is calculated using a key shared between the transmitting and receiving devices.

4. The method of Claim 3, wherein the shared key is a Scrambled Timestamp Sequence (STS) key used by the transmitting and receiving devices to generate Ranging integrity fragments (RIF) as ranging fragments.

5. The method of any of Claims 1 to 4, wherein the pseudo-random duration lasts half-millisecond or 600-RSTUs (ranging scheduling time unit) plus an additional duration pseudo-randomly determined.

6. The method of any of Claims 1 to 5, wherein the ranging fragments include Ranging integrity fragments (RIF).

7. The method of Claim 6, wherein the ranging fragments include Ranging sequence fragments (RSF).

8. The method of Claim 7, wherein a duration between a transmission time of the last RSF and a transmission time of the first RIF is a pseudo-random duration.

9. The method of Claim 7 or 8, wherein the same series of pseudo-random durations is used for the first ranging slots of the RSFs and for the first ranging slots of the RIFs.

10. The method of Claim 6, wherein the ranging fragments do not include a Ranging sequence fragment (RSF).

11. The method of any of Claims 1 to 10, wherein the receiving device also sends, to the transmitting device, a series of successive ranging fragments at the beginning of respective second ranging slots having each a pseudo-random duration, wherein the transmitting and receiving devices use the same series of pseudo-random durations for the first and second ranging slots.

12. The method of any of Claims 1 to 10, wherein the receiving device also sends, to the transmitting device, a series of successive ranging fragments at the beginning of respective second ranging slots having each a pseudo-random duration, wherein the transmitting and receiving devices use different pseudo-random durations between the first ranging slots and the second ranging slots.

13. The method of Claim 11 or 12, wherein the ranging fragments sent by the transmitting device and the ranging fragments sent by the receiving device are interleaved.

14. A communication device comprising an Ultra-Wide Band (UWB) Multi-millisecond (MMS) ranging unit configured to send, to a receiving device, a series of successive ranging fragments at the beginning of respective first ranging slots,
wherein each first ranging slot for the successive ranging fragments has a pseudo-random duration.

15. A communication device comprising an Ultra-Wide Band (UWB) Multi-millisecond (MMS) ranging unit configured to:
receive a series of successive ranging fragments sent by a transmitting device at the beginning of respective first ranging slots,
identify a start of each first ranging slot to retrieve the respective ranging fragment, and
accumulate channel impulse responses (CIRs) of the retrieved ranging fragments,
wherein each first ranging slot for the successive ranging fragments has a pseudo-random duration.

16. A non-transitory computer-readable storage medium storing instructions of a computer program for implementing any method of Claims 1 to 13.
